# EUROPEAN PATENT APPLICATION

(11) **EP 4 579 176 A1**
(43) Date of publication of application: **02.07.2025**
(21) Application number: 24306976.2
(22) Date of filing: 26.11.2024
(51) Int. Cl.: G01B 11/25, G01B 11/255, G06T 7/00, G06T 7/62, G06F 113/04

(54) **A METHOD FOR CHARACTERIZING A CURVED LENGTH OF CABLE**

(30) Priority: 27.12.2023 NO 20231397
(71) Applicant: Nexans, 92400 Courbevoie (FR)
(72) Inventor: DOEDENS, Espen, 92400 COURBEVOIE (FR)
(74) Representative: Onsagers AS

(57) **Abstract**

A method for characterizing a curved length of an installed cable (26, 30, 31) such as a cable loop or a section of a cable loop comprises the following steps:
a) providing a 3D image (402) of the curved length of the installed cable (26, 30, 31) by using a 3D capturing device (401);
b) analyzing the 3D image to identify multiple center points (35, 36) along the center axis of the curved length of the installed cable (26, 30, 31) and map the multiple center points (35, 36) in a three-dimensional coordinate system, and
c) create a three-dimensional trace representing the center axis of the curved length of the installed cable (26, 30, 31) based on the identified multiple center points (35, 36).

## Description

### TECHNICAL FIELD

The present invention relates to a method for characterizing a curved length of cable such as a cable loop or a section of a cable loop. The present invention further relates to a characterizing system for providing a characterization of a curved length of cable such as a cable loop or a section of a cable loop.

### BACKGROUND

High voltage extruded cables and the major accessories (joint, terminations) are generally acknowledged to be reliable and mostly immune from weather effects or other environmental impacts. However, when failures do occur, the restoration efforts may be lengthy, and it may be a challenge to locate the point of failure and also the cause of failure.

The quality control (QC) procedures of cable accessory manufacturing and installation, as well as training associated with such operations, involves today proper monitoring of operator skill level and reliance on high quality workmanship.

The applicant has thus previously developed a simple and robust tool for quality control that delivers increased reliability. This system uses laser scanning of cables and cable accessory to inspect the quality of cables, cable ends, cable accessory and other components during and after manufacturing, and before and after installation in a grid or other cable infrastructure. The term cable infrastructure describes in this document a cable or a grid or network of several cables of varying length and with varying configuration, where the cables are connected together and to terminals or other end stations and which comprises components necessary for the cable infrastructure to work.

One type of configuration within a grid or network of cables is cable loops, i.e. cables bent or coiled into a curved or circular shape to form one or several bends, turns and/or loops. Loops and other curved sections of cables are also an issue before installation, for example during production when the cables are arranged in a cable track.

When a cable is bent, there is a risk of the cable being damaged, for example due to overbending the cable. Over-bending can force the cable center conductor off-center, and force the outer conductor outwards, resulting in fractures and degraded performance. Also, overbending a cable considerably shortens the lifespan of the cable and may cause short circuiting and/or causing a fire. On the outside of the bend the cable materials are stretched out, so that they may become thinner or perhaps even show cracks - as a result of which the original electrical properties of the conductor insulation damaged. Overbends can occur for any cable type, being it a cable in a household, a MV cable, or a HV cable. Assessing and documenting quickly if a certain cable installation includes overbending (in three dimensions) is thus really a key feature.

Today, cable loop and installation dimensions are assessed manually in different ways, such as:
- An overbent cable (during installation, or in the factory) is today assessed by taking a picture and from the image pixels deducing the minimum bending radius. The result is heavily dependent on the perspective of the image and if the bend is in 2D or 3D, and can therefore often be inaccurate.
- Cable loop lengths are assessed with manual measurement tools and noted down manually. Also, loop layout drawings are made manually, for example using 3D software, but these may not represent the dimensions of the installed cable down to the finest detail. 3D scans of loop layouts have been made, but to annotate any dimensions is still a manual task.
- Additional complexities such as spacing between several cables in 3D is today monitored manually.
- Lidar scanning has been used to map cable loops, but during post-processing of the lidar images, the loop dimension assessments is times-consuming and there are considerable risks of inaccuracy due to the manual interpretation of cable position.

The object of the invention is to provide a method for characterizing a curved length of cable such as a cable loop or a section of a cable loop, to be able to determine design or installation errors and to foresee potential problems caused by sub-optimal installation of a cable loop.

The object of the invention is achieved by means of the features of the patent claims.

### SUMMARY OF THE INVENTION

A method for characterizing a curved length of an installed cable such as a cable loop or a section of a cable loop comprises:
a) providing a 3D image of the curved length of the installed cable by using a 3D capturing device;
b) analyzing the 3D image to identify multiple center points along the center axis of the curved length of the installed cable and map the multiple center points in a three-dimensional coordinate system, and
c) create a three-dimensional trace representing the center axis of the curved length of the installed cable based on the identified center points.

By center points it should be understood any point that can be found along the center axis of a cable, ie. an axis running longitudinally along the center of the cross-sections of the cable at any point along the cable's length.

The 3D capturing device can be LIDAR, photogrammetry, laser scanning, structured light scanning, etc.

The step b) of analyzing the 3D image of the curved length of the installed cable includes in one configuration using a pre-specified diameter range as constraints for identifying the multiple center points along the center axis of the installed cable.

Step c) may comprise using an interpolation equation/algorithm to create the trace representing the center axis of the curved length of the installed cable.

Step c) may further comprise determining the position of the curved length of the installed cable in the three-dimensional coordinate system.

The method may further comprise a step d) of calculating the length of the curved length of the installed cable and at least one of: the minimum bending radius of the curved length of cable, the diameter variations along the curved length of cable and average diameter over the curved length of the installed cable.

By the minimum bending radius it should be understood the minimum radius of curvature of the installed cable along the curved length of the installed cable. As will be described in more detail below, a length of the installed cable may be bent differently along its length, and it may be advantageous to determine where on the installed cable it is bent the most and to what degree it is bent. The determined minimum bending radius can be compared to the minimum allowable bending radius for the specific cable or cable type used to evaluate if the installed cable has been exposed to unallowable bends.

The method may further comprise a step e) of analyzing the 3D image to identify surface markings on the curved length of the installed cable and associating the surface markings with coordinates in the three-dimensional coordinate system.

The method may further comprise a step f) of providing a representation of a cable infrastructure wherein the cable infrastructure comprises at least one installed cable comprising the curved length of cable, where the representation of the cable infrastructure comprises position information in a three-dimensional coordinate system, a step g) of associating the trace representing the center axis of the curved length of the installed cable with the corresponding curved length of cable in the representation of the cable infrastructure, and a step h) of creating an updated representation of the cable infrastructure comprising the curved length of the installed cable.

The method may further comprise creating a two-dimensional projection of the three-dimensional trace. Such a two-dimensional trace can then be compared to earlier design drawings of the cable installation. When a match is found it is possible to associate the trace with the corresponding element in the drawing and also in the representation of the cable infrastructure. Similar steps may also be performed with the three-dimensional trace.

The representation of the cable infrastructure comprises in one configuration information of the physical environment surrounding the at least one cable comprising the curved length of cable. The method may then comprise a step i) of calculating the distance from the curved length of the installed cable to physical elements in the physical environment.

In one configuration a characterizing system for providing a characterization of a curved length of the installed cable such as a cable loop or a section of a cable loop comprises:
a 3D capturing device for providing a 3D image (402) of the curved length of the installed cable;
a computing device configured to:
   - analyze the 3D image to identify multiple center points along the center axis of the curved length of the installed cable and map the multiple center points in a three-dimensional coordinate system, and
   - create a three-dimensional trace representing the center axis of the curved length of the installed cable based on the identified center points.

### BRIEF DESCRIPTION OF THE DRAWINGS

Figure 1 illustrates an image of a cable loop with manually measured and annotated dimensions.
Figure 2 illustrates schematically an example of a cable infrastructure.
Figure 3 illustrates an example of a 3D capturing device.
Figure 4 illustrates an image of two curved lengths of cable
Figure 5 is a flow chart illustrating a method for characterizing a curved length of the installed cable.
Figure 6 is a flow chart illustrating a method for characterizing a curved length of the installed cable comprising additional steps.
Figure 7 illustrates an example of calculating bending radius of a cable loop.

### DETAILED DESCRIPTION

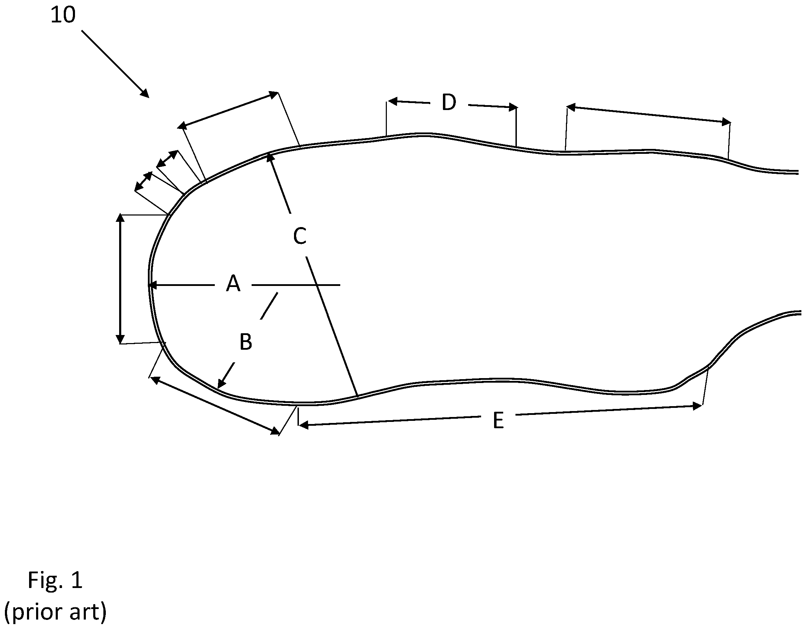

Figure 1 illustrates schematically an image or drawing of a cable loop 10 with manually measured and annotated dimensions A, B, C, D, E as is traditionally done in prior art.

The image/drawing of the cable loop 10 may have been provided by means of a 2D or 3D imaging device and may have been processed by imaging processing means to provide a schematic drawing of the cable loop to facilitate measurements. Alternatively, the drawing is made manually by an operator.

The measurements and any subsequent calculations and evaluations are time consuming and inaccurate and there is thus a need for a better method.

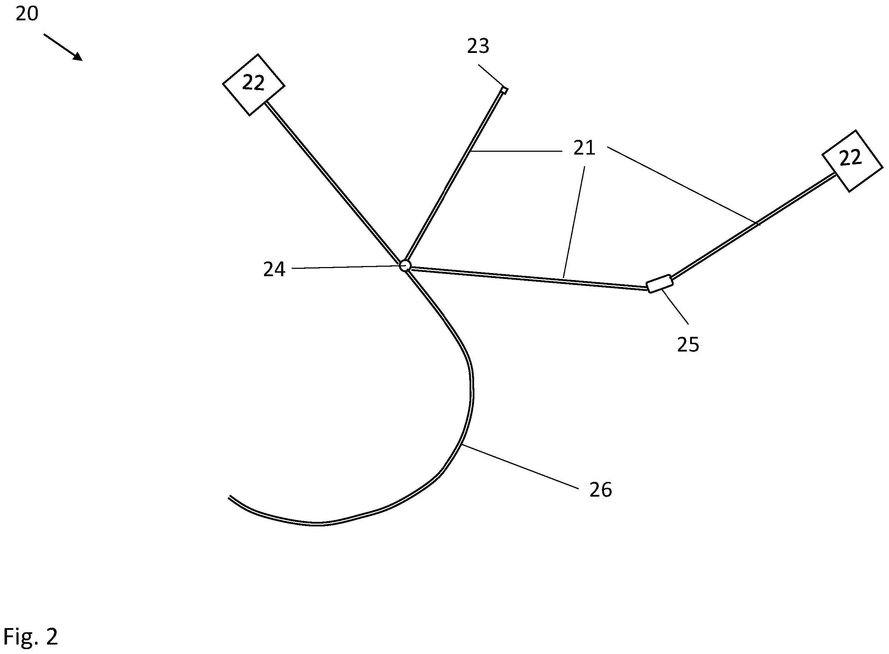

A cable infrastructure 20 is illustrated schematically in figure 2. The cable infrastructure comprises a plurality of installed cables 21, a curved length of an installed cable 26, and cable components 22, 23, 24, 25 which all are connected to form the cable infrastructure 20.

Examples of cable infrastructures are local power grids, power transmission systems such as high-voltage direct current (HVDC) electric power transmission systems and high-voltage alternating current (HVAC) electric power transmission systems, signal transmission networks, etc.

The installed cables 21 may be any kind of cable, such as low voltage cables, high voltage cables, medium voltage cables, signal transmission cables, composite cables, or in some instances a combination of cable types.

The cables may be suspended from transmission towers as air cables, be buried in trenches that are filled in after deployment, run inside buildings, etc.

In the illustrated example, one of the cables is arranged curved, ie. comprises a curved length of an installed cable 26.

Examples of cable components 22, 23, 24, 25 are typically referred to as cable accessories, such as connectors, flanges, bolts, etc, as well as joints, branches, terminations etc.

In reality, an installed cable infrastructure will look different than the schematic illustration of fig. 2. The cables may be installed in trenches and will therefore follow the terrain and trenches in which it is installed. Hence, the cables will not be as linear as in fig. 2, and the curvature of the curved length of the installed cable 26 does not necessarily have the exact curvature of the illustration.

The schematic illustration of figure 2 can for example be an example of a construction drawing, where the cable route is typically planned in advance. However, the final installment never matches the drawing down to the finest detail, as the cable naturally follows the trench, the pipe, the duct, the wall in which it is installed, posing certain bending stiffness depending on the design of said cable.

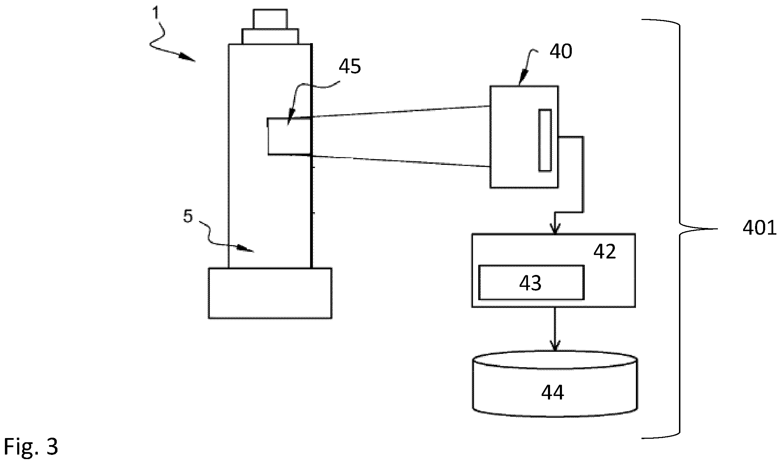

Fig. 3 is a schematic illustration of an example of a 3D capturing device 401 for providing a 3D image 402, for example a 3D image of a curved length of cable such as a cable loop or a section of a cable loop and possibly other elements of a cable infrastructure.

In this example, the 3D capturing device 401 is a scanning system for scanning the surface of a length of cable 1. The sizes of various object of the illustration are not in scale. The scanning system comprises a non-contact surface scanner 40. The non-contact surface scanner 40 is directable to an area of interest 45 of the cable 1.

In one embodiment, the non-contact surface scanner 40 may be a 3D laser scanner. The scanner may also be other types of non-contact surface scanners, for example white line scanners using projected white lines able to project up to 1,500,000 measurements/s and/or LIDAR, photogrammetry, structured light scanning, etc. or other kinds of suitable scanners.

The non-contact surface scanner 40 is arranged to measure the distance to the surface 5 of the area of interest 45. In the example in the figure, the field-of-view of the non-contact surface scanner corresponds to the area of interest, but the area of interest 45 on the surface 5 may be larger or smaller than the field-of-view or scanning area of the non-contact surface scanner 40. The field-of-view may be round, rectangular, linear or any other shape as determined by the non-contact surface scanner. The non-contact surface scanner 40 is movable around the cable 1, which can be part of the cable loop 10, such that the surface 5 of the cable 1 is covered by a plurality of sub-areas in order to ensure that the entire area of interest of the cable surface is scanned. The size of plurality of sub-areas may vary, for example by varying the distance between the non-contact surface scanner 10 and the cable 1. In one embodiment the non-contact surface scanner 10 is freely movable in any direction around the cable 1, such as a handheld 3D laser scanner.

The non-contact surface scanner 40 stores its position and direction in 3D space, for example by recognizing a plurality of markers (not shown) positioned on the surface 5. The markers may be stickers or sterile clamps with specific patterns or markers thereon. The markers will result in "NaN" (not a number = empty) areas underneath them, however, the scan can be paused, markers/clamps relocated and then the measurement can also scan the area under the markers. In another embodiment the non-contact surface scanner 40 may be mounted to a fixture or jig, e.g. mountable to the HV-cable, such that the non-contact surface scanner 40 may be moved up/down and around the surface 5 to completely fill the area of interest 5 with sub-areas. In this way, using markers may be avoided. In other embodiments, the non-contact surface scanner 10 can be arranged in a fixture or jig, and the cable may be moved relative to the scanner 10.

In some embodiments, the geometry of the scanned surface itself may be used as reference for the position of the non-contact surface scanner 40 itself in 3D space.

The illustrated scanning system also comprises an analysis unit 42. The analysis unit 42 is in communication with the non-contact surface scanner 40 over a wired or wireless communication link. In one embodiment, at least parts of the analysis unit 42 may be comprised in the non-contact surface scanner 40. The analysis unit 42 comprises a computing device 43 adapted to process measurement data from the non-contact surface scanner 40 for each of the plurality of sub-areas to create a continuous 3D surface geometry measurement of the area of interest 45. The continuous 3D surface geometry measurement can be processed to evaluate the characteristics of the surface and the analysis unit 42 can also create a 3D image 402 of the surface.

The 3D image is a representation of the surface that has been scanned which comprises a large number of data points in three dimensions, thus comprising a large set of datapoints in three dimensions (x,y,z).

The datapoints may be said to be in 3D or a 4D mesh, where the 4D mesh is similar, but also comprises vertices so one knows how the points are connected, for example with triangles, to form a surface. By datapoints it can be understood datapoints in the mesh, and data associated to it, which also can be referred to as a «point cloud».

In one embodiment, the analysis unit 42 is adapted to transmit the continuous 3D surface geometry measurement to a storage device 44 as a 3D topographic map or a 3D image of the area of interest 45. The analysis unit 42 is in communication with the storage device 44 over a wired or wireless communication link. The storage device 44 may be on on-premise server or cloud server. The 3D topographic map of the surface 5 of the cable 1 on the server 44 may be accessible to users and clients for future reference of the cable infrastructure.

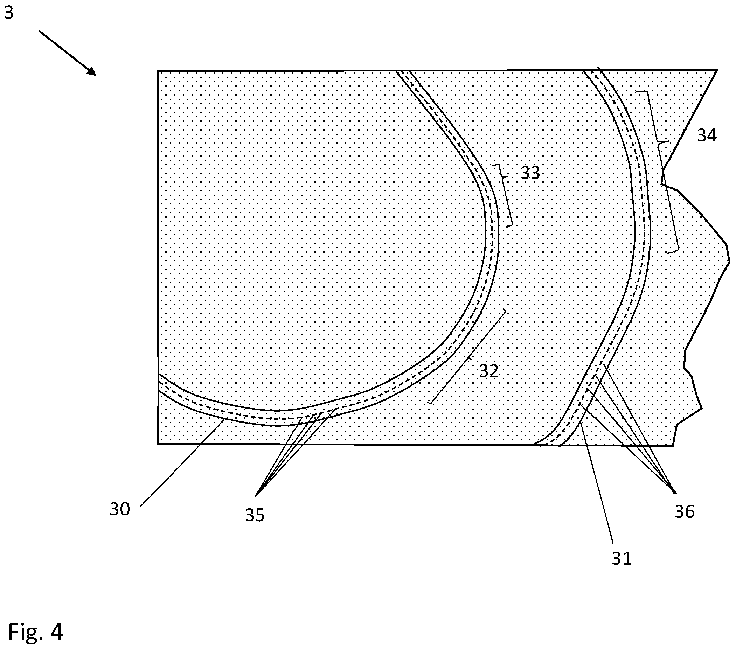

Figure 4 illustrates an image 3 of a first curved length of an installed cable 30 and a second curved length of an installed cable 31, where for example each is a section of one or two cable loops.

The image 3 is shown as depicting the two curved lengths of the installed cable 30, 31 in 2D, but the image 3 is preferably a 3D image captured by means of a 3D capturing device 401, for example the 3D capturing device described above and illustrated in figure 3. The image 3 thus comprises a large set of datapoints in three dimensions that can be used for a variety of analyses and computations to characterize the curved lengths of the installed cable 30, 31.

Thus, after providing the 3D image 3, the 3D image can be analyzed to determine the characteristics of the curved lengths of the installed cable 30, 31.

One step in the analysis, is to identify multiple center points 35, 36 along the center axis of the two curved lengths of the installed cable 30, 31. The center points 35, 36 can then be mapped in a three-dimensional coordinate system for further processing and/or observation. Also, other characteristics of the curved lengths of cable may be determined, such as the diameter of the cable along the curved lengths of cable, any irregularities on the surface of the cable, etc.

The identified center points 35, 36 can for example provide basis for creating a three-dimensional trace that represents the center axis of each of the curved lengths of cable. The traces can for example be created by using an interpolation equation or an interpolation algorithm that uses the identified center points 35, 36 to fill in any missing information to create the trace. The identified and mapped multiple center points, possibly also in combination with further information from the 3D image, may also be used to determine the position of the curved lengths of cable in the three-dimensional coordinate system.

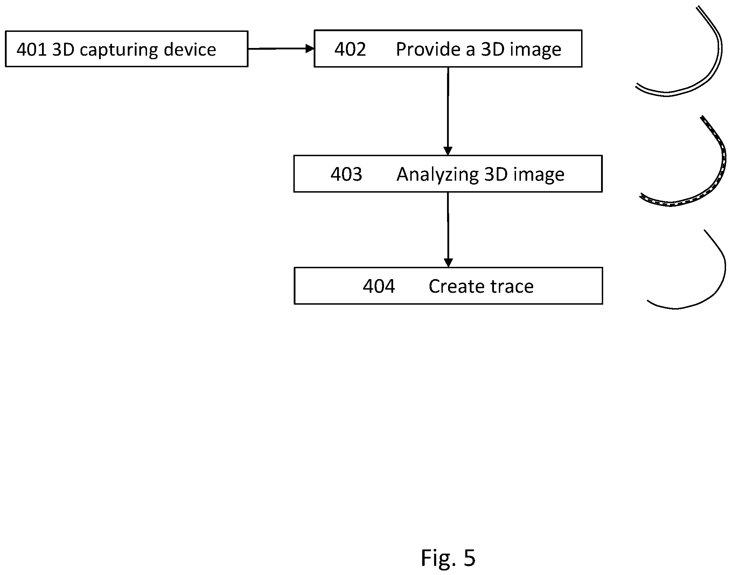

Figure 5 is a flow chart illustrating a method for characterizing a curved length of the installed cable 30, 31 such as a cable loop 10 or a section of a cable loop installed in a physical environment.

The method comprises the following steps:
In step 402, there is provided a 3D image of the curved length of the installed cable 30, 31 by using a 3D capturing device 401. The 3D capturing device 401 can for example be the one described above and illustrated in figure 3.

The 3D image is then analyzed in step 403, where the analysis includes identifying multiple center points along the center axis of the curved length of cable and map the multiple center points in a three-dimensional coordinate system as described above.

Based on multiple center points identified and mapped, there is created a trace in three dimensions representing the center axis of the curved length of cable in step 404.

The three-dimensional trace created in step 404 can further be used for further calculations, alone or in combination with further information from the amount of data points in the 3D image.

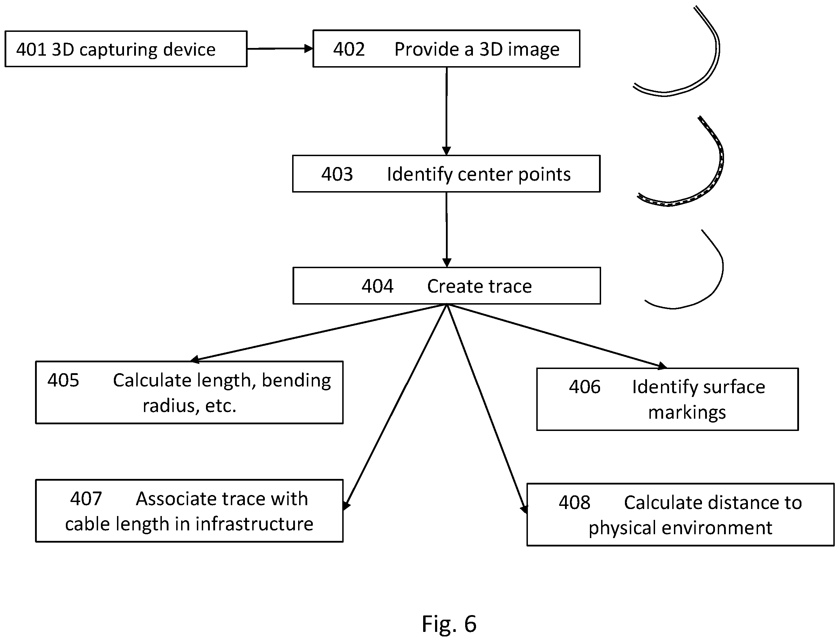

Figure 6 illustrates further steps 405, 406, 407, 408 in a method for characterizing a curved length of the installed cable 30, 31 such as a cable loop 10 or a section of a cable loop. The further steps 405, 406, 407, 408 may be employed individually/one at a time or in combination/simultaneously.

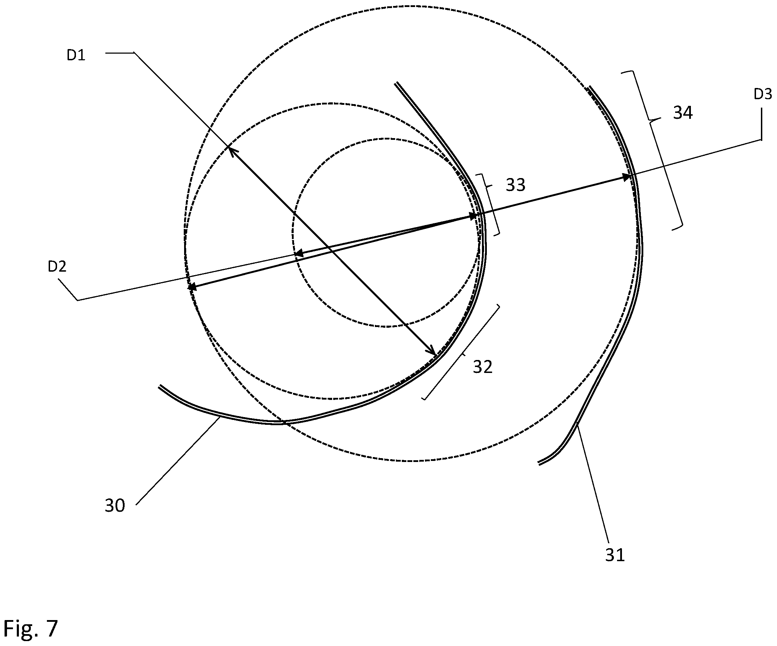

In step 405 the length of the curved length of cable is calculated. In the same step, or possibly in separate steps, at least one of the minimum bending radius of the curved length of cable, the diameter variations along the curved length of cable and average diameter over the curved length of cable is calculated. In figure 7 an example of how to calculate minimum bending radius of a cable loop is illustrated, and this will be described below.

The calculation of local bending radius can further be associated with the «local direction» of the cable, for example by correlating the bending radius in a specific location (coordinates in the three-dimensional coordinate system) with the trace representing the center axis of the cable in the same location. This provides information such as the bending per length and in what direction does it point.

In step 406 the 3D image is analyzed to identify surface markings on the curved length of cable and associate the surface markings with coordinates in the three-dimensional coordinate system. Such surface markings can be colored tapes, tags, or geometric markings which can supply information regarding the cable in that location. The surface marking and the associated information in each location is known and may be stored in a storage device and can be used to enhance the knowledge of the cable infrastructure.

In step 407 there is further provided a representation of a cable infrastructure. The representation of the cable infrastructure can be provided from a cable routing map, or a digital model of the cable infrastructure or other representation, and comprises in most instances location information for the elements in the cable infrastructure. The representation of the cable infrastructure may be stored in a storage device connected to or included in a computing device, for example the computing device included in the scanning device or other computing means. The cable infrastructure comprises at least one cable comprising the curved length of cable that is being characterized and the representation of the cable infrastructure comprises position information of the curved length of cable in a three-dimensional coordinate system.

The trace representing the center axis of the curved length of cable can then be associated with the corresponding curved length of cable in the representation of the cable infrastructure This can for example by done by using location information/coordinates in the three-dimensional coordinate system. Another example is to fit pure mathematical expressions to the shape of the «cable shell» that can be found in the 3D image. Yet another example is to use a filtering method. Also, machine learning algorithms can be used to identify the cable loop or other curved length of cable in order to associate the cable loop/curved length of cable with the appropriate part of the representation of the cable infrastructure.

Using the trace associated with the representation of the cable infrastructure provides real information regarding the actual curved length of cable and the information can then be used to create an updated representation of the cable infrastructure comprising the curved length of cable. The information regarding the actual curved length of cable can also be used to issue warnings to an operator of overbend or other critical factors that then can be corrected or give "green light" for the cable infrastructure.

The representation of the cable infrastructure may comprise information regarding the physical environment surrounding the at least one cable comprising the curved length of cable. The physical environment can for example comprise physical elements such as joints, terminations, walls, boxes, terminations, clamps, etc. In step 408 the representation of the cable infrastructure comprising such information is used to calculate the distance from the curved length of cable to some of or all such physical elements in the physical environment. This information can be used by an operator or by the computing device to evaluate if actual arrangement of the cable/cable structure is optimal, or if any changes should be done.

Figure 7 illustrates an example of how to calculate minimum bending radius of a cable loop. Figure 7 illustrates the same two curved lengths of the installed cable 30, 31, for example two sections of a cable loop as illustrated in figure 4. The two curved lengths of the installed cable 30, 31 have sections with different bending/curving radius. Three such sections 32, 33, 34 are illustrated in the figure. To calculate the bending radii, the computing device or other means may use circles with different diameters and compare them to the sections to be calculated. The circle with best fit, defines the bending radius of that section. In figure 7, a circle with diameter D1 has been fitted to section 32 of the first curved length of the installed cable 30 and a circle with diameter D2 has been fitted to section 33 of the first curved length of the installed cable 30. As D2 is smaller than D1, the section 33 is determined to be the smallest bending radius for the first curved length of the installed cable 30. Similarly, a circle with diameter D3 has been fit to a section 34 of the second curved length of the installed cable 31.

## Claims

1. A method for characterizing a curved length of an installed cable (26, 30, 31) such as a cable loop or a section of a cable loop, where the method comprises the following steps:
a) providing (402) a 3D image (3) of the curved length of the installed cable (26, 30, 31) by using a 3D capturing device (401);
b) analyzing (403) the 3D image (3) to identify multiple center points (35, 36) along the center axis of the curved length of the installed cable (26, 30, 31) and map the multiple center points (35, 36) in a three-dimensional coordinate system, and
c) creating (404) a three-dimensional trace representing the center axis of the curved length of the installed cable (26, 30, 31) based on the identified multiple center points (35, 36).

2. The method according to claim 1, wherein step b) of analyzing the 3D image of the curved length of the installed cable (26, 30, 31) includes using a pre-specified diameter range as constraints for identifying the multiple center points (35, 36) along the center axis of the installed cable.

3. The method according to claim 1 or 2, wherein step c) comprises using an interpolation equation/algorithm to create the trace representing the center axis of the curved length of the installed cable (26, 30, 31).

4. The method according to any of the previous claims, wherein step c) further comprises determining the position of the curved length of the installed cable (26, 30, 31) in the three-dimensional coordinate system.

5. The method according to any of the previous claims, further comprising a step d) of calculating (405) the length of the curved length of the installed cable (26, 30, 31) and at least one of: the minimum bending radius of the curved length of the installed cable (26, 30, 31), the diameter variations along the curved length of the installed cable (26, 30, 31) and average diameter over the curved length of the installed cable (26, 30, 31).

6. The method according to any of the previous claims, further comprising a step e) of analyzing the 3D image to identify (406) surface markings on the curved length of the installed cable (26, 30, 31) and associating the surface markings with coordinates in the three-dimensional coordinate system.

7. The method according to any of the previous claims, further comprising a step f) of providing a representation of a cable infrastructure (20) wherein the cable infrastructure (20) comprises at least one installed cable comprising the curved length of the installed cable (26, 30, 31), where the representation of the cable infrastructure (20) comprises position information in a three-dimensional coordinate system,
g) associating (407) the trace representing the center axis of the curved length of cable with the corresponding curved length of the installed cable (26, 30, 31) in the representation of the cable infrastructure (20), and
h) creating an updated representation of the cable infrastructure (20) comprising the curved length of the installed cable (26, 30, 31).

8. The method according to claim 7, wherein the representation of the cable infrastructure (20) comprises information of the physical environment surrounding the at least one cable comprising the curved length of the installed cable (26, 30, 31), and wherein the method comprises a step
i) calculating (408) the distance from the curved length of the installed cable (26, 30, 31) to physical elements in the physical environment.

9. A characterizing system for providing a characterization of a curved length of the installed cable (26, 30, 31) such as a cable loop or a section of a cable loop, where the characterizing system comprises:
a 3D capturing device (401) for providing a 3D image (402) of the curved length of the installed cable (26, 30, 31);
a computing device configured to:
- analyze the 3D image to identify multiple center points (35, 36) along the center axis of the curved length of the installed cable (26, 30, 31) and map the multiple center points (35, 36) in a three-dimensional coordinate system,
- create a three-dimensional trace representing the center axis of the curved length of the installed cable (26, 30, 31) based on the identified multiple center points (35, 36).
